(19) Europäisches Patentamt
European Patent Office
Office européen des brevets

(11) Publication number: **0 492 224 B1**

# (12) EUROPEAN PATENT SPECIFICATION

(45) Date of publication of patent specification: **10.05.95**

(51) Int. Cl.[6]: **C09D 9/04**, D21C 5/02

(21) Application number: **91121000.3**

(22) Date of filing: **06.12.91**

## (54) Deinking agent for the reclamation of waste paper.

(30) Priority: **28.12.90 JP 416432/90**

(43) Date of publication of application:
**01.07.92 Bulletin 92/27**

(45) Publication of the grant of the patent:
**10.05.95 Bulletin 95/19**

(84) Designated Contracting States:
**DE FR GB IT SE**

(56) References cited:
**EP-A- 0 434 084**
**DE-A- 3 401 444**

**PATENT ABSTRACTS OF JAPAN, vol. 015, no. 153 (C-0826), 24 April 1991; & JP-A-03 035 067**

(73) Proprietor: **Mitsubishi Oil Company, Limited**
**no. 2-4, Toranomon 1-chome**
**Minato-ku**
**Tokyo (JP)**

(72) Inventor: **Takahashi, Yoshio**
**1-33-4, Sakuragaoka**
**Yokosuka-shi,**
**Kanagawa (JP)**
Inventor: **Taketomi, Yasuaki**
**1-403-10-601, Kosugi-cho,**
**Nakahara-ku**
**Kawasaki-shi,**
**Kanagawa (JP)**
Inventor: **Nakamura, Takashi**
**10, Kuritaya,**
**Kanagawa-ku**
**Yokohama-shi,**
**Kanagawa (JP)**
Inventor: **Aizono, Hirofumi**
**1-17-1-316, Kodai,**
**Miyamae-ku**
**Kawasaki-shi,**
**Kanagawa (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

EP 0 492 224 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a deinking agent to be used for the reclamation of waste paper such as is used newspapers, OA (office automation) papers, magazines and books. More particularly, it relates to a deinking agent excellent in its ability to collect, aggregate and liberate ink. Therefore, a deinked pulp having high whiteness and contaminated with little unliberated ink can be obtained by deinking, for example, newspapers, OA papers, magazines and books with the deinking agent of the present invention by a flotation method, a washing method or a combined flotation/washing method.

It has become the practice to reclaim printed waste paper including newspapers and magazines. Recently, the uses for deinked pulp have been enlarged and advanced. On the other hand, the effective utilization of waste paper has become more and more important in order to reduce paper manufacturing costs.

Further, the reclamation of waste paper is highly valuable from the viewpoints of saving energy, refuse collection in urban communities and conservation of forest resources.

On the other hand, recent improvements in printing techniques, printing systems and ingredients of printing inks have made it difficult to deink waste paper. In order to facilitate deinking, therefore, attempts have been made to improve deinking devices.

Deinking agents may be roughly classified into two types, namely, dispersion-type deinking agents whereby liberated ink is removed from the system in a finely dispersed state (mainly involving nonionic surfactants), and aggregation-type deinking agents whereby liberated ink is aggregated to a certain degree and then removed from the system.

Known chemicals which have been employed as such deinking agents for reclaiming waste paper include anionic surfactants (for example, alkylbenzene sulfonates, alkyl sulfates, $\alpha$-olefin sulfonates, dialkyl sulfosuccinates, higher fatty acid salts), nonionic surfactants (for example, higher alcohol ethylene oxide adducts, alkyl phenol ethylene oxide adducts, fatty acid ethylene oxide adducts, fatty acid amide ethylene oxide adducts, polypropylene glycol ethylene oxide adducts, fat ethylene oxide adducts, higher alcohol ethylene oxide propylene oxide adducts) and ampholytic surfactants (for example, amine oxides, alkyl betaines).

In addition, JP-A-57-117690 discloses a deinking agent obtained by reacting a polyoxyalkylene adduct of a polybasic acid, the reaction being only with a dibasic acid. Although this compound shows deinking performance to a certain degree, it is not always satisfactory (the term "JP-A" as used herein means an "unexamined published Japanese patent application").

However, these chemicals and blends thereof would not always show a sufficiently high deinking efficiency in the flotation stage. Thus, they do not always give a reclaimed paper having high whiteness which is contaminated with less unliberated ink.

When a fatty acid which is in the form of a solid at room temperature is used, it shows excellent ability to aggregate ink but a number of unliberated ink spots are frequently formed. Further, high cost for supplying energy for melting the solid fatty acid is involved.

When a fatty acid salt is used as such or in the form of an aqueous solution, the obtained reclaimed pulp shows low whiteness. When a fatty acid which is in the form of a liquid at room temperature is used, it suppresses foaming of a surfactant employed as a foaming agent and thus the liberated ink cannot be fully removed from the system. As a result, the whiteness of the pulp thus reclaimed cannot be increased.

Although common nonionic surfactants are excellent in their ability to disperse ink, detergency and foaming properties, they result in only poor aggregation of ink. Therefore, the reclaimed pulp obtained will not always show high whiteness.

As described above, there has been found no chemicals which are excellent in all characteristics including the liberation of ink from waste paper and aggregation of the liberated ink in the pulping stage as well as foaming properties and the ability to collect ink in the flotation stage. Thus, the general practice is to combine or blend two or more specific chemicals. Although a deinking method using a blend thus obtained exerts effects at a certain level, it is not always satisfactory.

In recent years, the utilization of deinked pulp has been enlarged and the mixing ratio thereof with fresh pulp has been increased. As a result, contamination of the deinked pulp with unliberated ink spots, which are not removed from waste paper, has become a serious problem. In addition, waste paper which can hardly be deinked (for example, OA paper with the use of toners) has recently been more and more employed. Under these circumstances, it has been urgently required to develop a deinking agent having an improved ability to liberate ink.

German Patent Application DE-3401444 reveals a method of deinking and regenerating waste paper. A deinking agent comprising a polyethylene oxide ester of a carboxylic acid is contained as an active

ingredient. The agent must also contain at least one propyl or butyl oxide group in order to function properly.

## SUMMARY OF THE INVENTION

Therefore, the present inventors conducted extensive research in order to find a deinking agent free from the above-mentioned disadvantages, thus reaching the present invention.

The deinking agent for the reclamation of waste paper of the present invention comprises the following reaction products:

a reaction product which is obtained by reacting a reaction product obtained by adding 10 or more mols, per mol of a polyhydric alcohol, of alkylene oxide(s) to the polyhydric alcohol (the added 10 or more mols alkylene oxide(s), namely, polyoxyalkylene group(s), are selected from among ethylene oxide, propylene oxide and butylene oxide and may be either a random polymer chain or a block polymer chain when two or more kinds of the oxyalkylene groups are present) with at least one of the compounds represented by the following general formulae (1), (2), (3) and (4).

General formula (1):

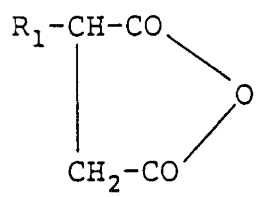

wherein $R_1$ represents an alkyl or alkenyl group having 5 to 30 carbon atoms.

General formula (2):

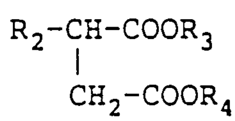

wherein $R_2$ represents an alkyl or alkenyl group having 5 to 30 carbon atoms; and

$R_3$ and $R_4$ both represent hydrogen atoms or either one represents an alkyl or alkenyl group having 1 to 8 carbon atoms and the other represents a hydrogen atom.

General formula (3):

$$\begin{array}{l} R_5\text{-}CH\text{-}COO\text{-}(A_1O)_n\text{-}H \\ \quad\;\; | \\ \quad\;\; CH_2\text{-}COOH \end{array}$$

and/or

$$\begin{array}{l} R_5\text{-}CH\text{-}COOH \\ \quad\;\; | \\ \quad\;\; CH_2\text{-}COO\text{-}(A_1O)_n\text{-}H \end{array}$$

wherein $R_5$ represents an alkyl or alkenyl group having 5 to 30 carbon atoms; and

$A_1O$ represents a polyoxyalkylene group formed by polymerizing oxyalkylene groups having 2 to 4 carbon atoms which may be either a random polymer chain or a block polymer chain when two or more kinds of the oxyalkylene groups are present and n represents a number of 1 or above so as to give a number average molecular weight to the corresponding polyoxyalkylene group of 10,000 or less.

General formula (4):

$R_6$-COOH

wherein $R_6$ represents an alkyl or alkenyl group having 5 to 21 carbon atoms or an alkylphenyl or alkenylphenyl group having an alkyl or alkenyl group having 3 to 20 carbon atoms.

The deinking agent of the present invention for the reclamation of waste paper comprising a reaction product, which is obtained by, for example, further reacting a specific dibasic acid or fatty acid with a polyoxyalkylene oxide adduct obtained by adding alkylene oxide(s) to a polyhydric alcohol, is superior to those obtained by merely reacting a dibasic acid such as maleic or succinic acid in its ability to collect, deterge, disperse and aggregate ink and in its foaming properties. Thus, the compound of the present invention shows good deinking performance when employed alone. In addition, it is in the form of a liquid and thus can be easily handled, different from, for example, fatty acids.

## DETAILED DESCRIPTION OF THE INVENTION

The present invention will how be described in detail.

Any method may be arbitrarily selected in order to add alkylene oxide(s) to a polyhydric alcohol to thereby give the polyoxyalkylene adduct, so long as the desired compound can thereby be obtained. Examples of the polyhydric alcohol used here include ethylene glycol, propylene glycol, trimethylene glycol, butylene glycol, glycerol, trimethylolpropane, trimethylolethane, 1,2,4-butanetriol, 1,2,6-hexanetriol, 1,1,1-trimethylolhexane, pentaerythritol, tetramethylol cyclohexanol and diglycerol.

The compound represented by general formula (1) used in the present invention, which is an alkylsuccinic anhydride or an alkenylsuccinic anhydride, may be obtained by any method so long as the desired compound can thereby be synthesized. The alkyl and alkenyl groups may either be the same or different from each other in carbon atom number. Further, either straight-chain compounds or branched compounds may be used. However, it is undesirable that the carbon atom number of $R_1$ is 31 or more, since the compound is liable to solidify in this case and, further, the deinking performance of the reaction product obtained by reacting the compound with a polyoxyalkylene adduct obtained by adding alkylene oxide(s) to a polyhydric alcohol is deteriorated. In addition, it is not usual to use the carbon number of 4 or less in $R_1$, since the compound becomes vapor.

The compound represented by general formula (2) used in the present invention, which is an alkylsuccinic acid, an alkenylsuccinic acid or an alkyl or alkenyl monoester thereof, may be obtained by any method so long as the desired compound can thereby be synthesized. The alkyl and alkenyl groups in the alkylsuccinic or alkenylsuccinic acid may be either the same or different from each other in carbon atom number. Further, either straight-chain compounds or branched compounds may be used. However, it is undesirable that the carbon atom number of $R_2$ is 31 or more, since the compound is liable to solidify in

this case and, further, the deinking performance of the reaction product obtained by reacting the compound with a polyoxyalkylene adduct obtained by adding alkylene oxide(s) to a polyhydric alcohol is deteriorated.

When $R_3$ and $R_4$ represent alkyl or alkenyl groups having 9 or more carbon atoms, the deinking performance of the product obtained by reacting the compound is deteriorated.

The compound represented by general formula (3) used in the present invention, which is obtained by esterifying 1 mol of an alkylsuccinic acid or an alkenylsuccinic acid with 1 mol of a polyalkylene glycol obtained by preliminarily polymerizing alkylene oxide(s), may be obtained by any method so long as the desired compound can thereby be synthesized. The alkyl and alkenyl groups in the alkyl or alkenyl succinic acid may either be the same or different from each other in carbon atom number. Further, either straight-chain compounds or branched compounds may be used. However it is undesirable that the carbon atom number of $R_5$ is 31 or more or the number average molecular weight of $A_1O$ is 10,000 or more, since the deinking performance of the reaction product obtained by reacting the compound is deteriorated.

The compound represented by general formula (4) used in the present invention is a fatty acid. Examples thereof include straight-chain fatty acids (for example, lauric acid, stearic acid), unsaturated fatty acids (for example, oleic acid) and branched fatty acids (for example, isostearic acid). Either saturated or unsaturated and straight-chain or branched fatty acids may be used in the present invention.

The reaction for producing a reaction product by reacting a reaction product, which is obtained by adding alkylene oxide(s) to a polyhydric alcohol, with at least one of the compounds of general formulae (1), (2), (3) and (4) may be performed by any method so long as the desired product can thereby be obtained. When two or more compounds from general formulae (1) to (4) are selected, they may be successively reacted one by one so as to give the desired product. For example, 1 mol of a reaction product obtained by adding alkylene oxides to a polyhydric alcohol is reacted with a given amount of a compound represented by general formula (2) and then 1 mol of the resulting product is reacted with a given amount of a compound represented by general formula (4), to thereby give the desired deinking agent for the reclamation of waste paper.

As one example, 1 mol of alkylene oxide adduct of glycerine is mixed with 1 mol of alkenylsuccinic acid monomethyl ester having $C_{16}$ alkenyl group and 2 mol of stearic acid and reacted at 200 °C for 1.5 hours to obtain the desired deinking agent for the reclamation of waste paper.

Although the deinking agent of the present invention shows good deinking performance when employed alone, it may be blended or combined with other deinking agents. For example, the deinking agent of the present invention may be used together with a conventionally used deinking agent (e.g., fatty acids, fatty acid derivatives, nonionic surfactants, cationic surfactants, anionic surfactants) in any desired ratio.

In the reclamation of waste paper, the deinking agent of the present invention may be added either at the pulping stage or the soaking tower stage. The amount of the deinking agent may vary depending on the quality of the waste paper and the type of ink (for example, letterpress ink and offset ink). It is generally appropriate to add 0.1 to 0.8% by weight, still preferably 0.2 to 0.6% by weight, based on the dry starting waste paper, of the deinking agent.

In the compounds of general formulae (1), (2), (3) and (4), which are to be reacted with a polyoxyalkylene adduct obtained by adding alkylene oxide(s) to a polyhydric alcohol, it is particularly preferable, in order to achieve the objects of the present invention, that $R_1$, $R_2$ and $R_5$ each represents an alkyl or alkenyl group having 12 to 20 carbon atoms, that $R_3$ and $R_4$ each represents an alkyl or alkenyl group having 1 to 3 carbon atoms; and that $R_6$ represents an alkyl or alkenyl group having 11 to 17 carbon atoms.

In addition, the deinking agent of the present invention may further comprise a third component. For instance, the deinking agent of the present invention may be used together with a conventionally used deinking agent (e.g., fatty acids, fatty acid derivatives, nonionic surfactants, cationic surfactants, anionic surfactants) in any desired ratio. In particular, when the deinking agent of the present invention is used with fatty acids, it is also possible to use the deinking agent of the present invention together with a polyvalent metal salt (for example, calcium chloride, magnesium chloride, magnesium hydroxide, calcium hydroxide, ammonium sulfate). By this, it is possible to make a fatty acid an insoluble salt and to remove the insoluble salt from the system.

To further illustrate the present invention, and not by way of limitation, the following Examples are given.

EXAMPLES 1 TO 28

By using each of the compounds of the present invention of the formulations listed in Table 1 (samples No. 1 to 28) as a deinking agent, a deinking test was performed in accordance with "Method for Determining the Deinkability of Wastepaper" specified by Japan Technical Association of the Pulp and

Paper Industry (J. TAPPI: No. 39-82).

For example, the deinking agent No. 14 shown in Table 1 was prepared as follows. In a flask, a reaction product which was obtained by reacting 35 mol of ethylene oxide and 20 mol of propylene oxide to 1 mol of glycerol, was mixed with 1 mol of alkenylsucinic acid monomethyl ester having $C_{16}$ alkenyl group and 2 mol of stearic acid, and reacted at 200 °C for 1.5 hours to obtain the deinking agent No. 14. The other deinking agents shown in Table 1 were prepared according to the similar manner.

Waste paper comprising 70% by weight of newspapers (Mainichi, Asahi and Yomiuri) printed 1 to 3 months ago and 30% by weight of leaflets were cut into pieces (about 5mm × 10mm) and a given amount thereof was fed into a bench disintegrator. Then, 5.0% by weight (based on the dry starting waste paper) of 70 °C warm water, 1.4% by weight (based on the dry starting waste paper) of sodium hydroxide, 2.8% by weight (based on the dry starting waste paper) of sodium silicate No. 3, 1.0% by weight (based on the dry starting waste paper) of hydrogen peroxide (on a pure basis) and 0.2% by weight (based on the dry starting waste paper) of each of the deinking agents listed in Table 1 were added thereto. After disintegrating at a pulp concentration of 5% by weight at 60 °C for 10 minutes, the mixture was soaked at 50 °C for 1 hour.

After diluting with water to give a pulp concentration of 1% by weight based on water, the mixture was subjected to flotation at 30 °C for 10 minutes in a test flotator. (Amount of air is 10 liter per minute.) After the completion of the flotation, the pulp slurry was concentrated by squeezing using a nylon net having 100 meshes to thereby give a concentration of 10% by weight and then diluted with water to give a pulp concentration of 1% by weight. Next, it was treated with a TAPPI standard machine to thereby form a pulp sheet. The whiteness of the pulp sheet thus obtained was measured with a color difference meter (Z-1001DP; product of Nippon Denshoku K.K.) in accordance with JIS Z8722 and the number of unliberated ink spots contained therein and unliberated ink areas were determined using an image analyzer (Dot Analyzer DA-3000 (object glass: 5 x magnification); product of KS System Co.).

Table 2 summarizes the results.

COMPARATIVE EXAMPLES 1 TO 7

Four common marketed deinking agents

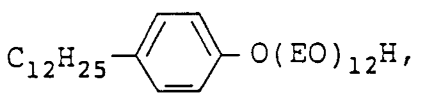

$C_{13}H_{27}COOH$, $C_{12}H_{25}(EO)_{10}H$, $HOOC(CH_2)_4COOH$ shown in Table 3 and others shown in Table 4 were subjected to the same test as described above to thereby evaluate the deinking performances thereof.

Tables 3 and 4 summarize the results.

In Table 1, EO represents an ethylene oxide unit, PO represents a propylene oxide unit and $A_1O$ and $A_2O$ each represents an alkylene oxide unit.

TABLE 1

| Sample No. | Polyhydric alcohol alkylene oxide adduct (a): Polyhydric alcohol | Polyhydric alcohol alkylene oxide adduct (a): Addition mol No. of alkylene oxide | Compound to be reacted with polyhydric alcohol alkylene oxide adduct: (b) | (c) | (d) | Molar ratio a:b:c:d |
|---|---|---|---|---|---|---|
| 1 | ethylene glycol=1 mol | EO/PO=35/20 mol | $C_{16}H_{31}CH(CH_2COOCH_3)COOH$ | stearic acid | - | 1:1:1:0 |
| 2 | glycerol=1 mol | " | " | " | - | " |
| 3 | pentaery thritol=1 mol | " | " | " | - | " |
| 4 | glycerol=1 mol | " | $C_6H_{11}CH(CH_2COOCH_3)COOH$ | - | - | 1:1:0:0 |
| 5 | " | " | $C_{12}H_{23}CH(CH_2COOCH_3)COOH$ | - | - | " |
| 6 | " | " | $C_{14}H_{27}CH(CH_2COOCH_3)COOH$ | - | - | " |
| 7 | " | " | $C_{16}H_{31}CH(CH_2COOCH_3)COOH$ | - | - | " |
| 8 | " | " | $C_{18}H_{35}CH(CH_2COOCH_3)COOH$ | - | - | " |
| 9 | " | " | $C_{20}H_{39}CH(CH_2COOCH_3)COOH$ | - | - | " |
| 10 | " | " | $C_{16}H_{31}CH(CH_2COOH)COOH$ | - | - | " |
| 11 | " | " | $C_{16}H_{31}CH(CH_2COOC_3H_7)COOH$ | - | - | " |
| 12 | " | " | $C_{16}H_{31}CH(CH_2COO(EO)_9(PO)_4H)COOH$ | - | - | " |
| 13 | " | " | $C_{16}H_{31}CH(CH_2COO(EO)_{20}(PO)_{10}H)COOH$ | - | - | " |
| 14 | " | " | $C_{16}H_{31}CH(CH_2COOCH_3)COOH$ | stearic acid | - | 1:1:2:0 |

TABLE 1 (continued)

| Sample No. | Polyhydric alcohol alkylene oxide adduct (a): Polyhydric alcohol | Polyhydric alcohol alkylene oxide adduct (a): Addition mol No. of alkylene oxide | Compound to be reacted with polyhydric alcohol alkylene oxide adduct: (b) | (c) | (d) | Molar ratio a:b:c:d |
|---|---|---|---|---|---|---|
| 15 | glycerol =1 mol | EO/PO=35/20 mol | $C_{16}H_{31}CH(CH_2COOCH_3)COOH$ | stearic acid | oleic acid | 1:1:1:1 |
| 16 | " | " | " | oleic acid | - | 1:1:2:0 |
| 17 | " | " | - | stearic acid | - | 1:0:1:0 |
| 18 | " | " | - | " | - | 1:0:2:0 |
| 19 | " | " | - | " | - | 1:0:3:0 |
| 20 | " | " | - | " | oleic acid | 1:0:2:1 |
| 21 | " | " | - | " | " | 1:0:1:2 |
| 22 | " | " | - | oleic acid | - | 1:0:2:0 |
| 23 | " | " | - | " | - | 1:0:3:0 |
| 24 | " | " | - | lauric acid | oleic acid | 1:0:2:1 |
| 25 | " | EO/PO=75/40 mol | $C_{16}H_{31}CH(CH_2COOCH_3)COOH$ | stearic acid | - | 1:1:2:0 |
| 26 | " | EO/PO=35/20 mol | $C_{16}H_{31}CH(CH_2COOH)COOH$ | " | oleic acid | 2:1:1:2 |
| 27 | " | " | " | " | " | 2:1:2:2 |
| 28 | " | " | " | " | - | 2:1:3:0 |

Note: EO: ethylene oxide unit.

PO: propylene oxide unit.

TABLE 2: EXAMPLES

| Deinking agent | | Whiteness (%) | Number of unliberated ink spots (per $cm^2$) | Area of unliberated ink spots ($mm^2/cm^2$) |
|---|---|---|---|---|
| Sample No. | 1 | 56.2 | 5890 | 0.79 |
| " | 2 | 56.4 | 5840 | 0.78 |
| " | 3 | 55.8 | 6450 | 0.86 |
| " | 4 | 54.0 | 7020 | 0.94 |
| " | 5 | 55.4 | 6520 | 0.88 |
| " | 6 | 55.6 | 6460 | 0.86 |
| " | 7 | 55.9 | 6430 | 0.85 |
| " | 8 | 55.8 | 6470 | 0.85 |
| " | 9 | 55.6 | 6450 | 0.86 |
| " | 10 | 55.7 | 6460 | 0.86 |
| " | 11 | 55.5 | 6500 | 0.87 |
| " | 12 | 55.8 | 6480 | 0.85 |
| " | 13 | 55.6 | 6450 | 0.85 |
| " | 14 | 56.6 | 5810 | 0.78 |
| " | 15 | 57.0 | 5720 | 0.76 |
| " | 16 | 56.6 | 5810 | 0.78 |
| " | 17 | 56.9 | 5750 | 0.77 |
| " | 18 | 56.9 | 5730 | 0.76 |
| " | 19 | 56.5 | 5820 | 0.79 |
| " | 20 | 56.7 | 5800 | 0.78 |
| " | 21 | 56.6 | 5830 | 0.78 |

TABLE 2 (continued)

| Deinking agent | | Whiteness (%) | Number of unliberated ink spots (per $cm^2$) | Area of unliberated ink spots ($mm^2/cm^2$) |
|---|---|---|---|---|
| Sample No. | 22 | 56.4 | 5850 | 0.79 |
| " | 23 | 56.6 | 5800 | 0.77 |
| " | 24 | 56.2 | 5880 | 0.79 |
| " | 25 | 56.4 | 5900 | 0.79 |
| " | 26 | 57.0 | 5700 | 0.75 |
| " | 27 | 56.7 | 5820 | 0.78 |
| " | 28 | 56.9 | 6730 | 0.78 |

Note: Each Sample No. is the same as that given in Table 1.

TABLE 3: COMPARATIVE EXAMPLES

| No. | Deinking agent | Whiteness (%) | Number of unliberated ink spots (per $cm^2$) | Area of unliberated ink spots ($mm^2/cm^2$) |
|---|---|---|---|---|
| 1 | $C_{12}H_{25}$ 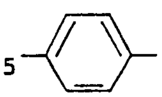 $O(EO)_{12}H$ | 49.0 | 43200 | 5.90 |
| 2 | $C_{13}H_{27}COOH$ | 50.0 | 38000 | 5.19 |
| 3 | $C_{12}H_{25}O(EO)_{10}H$ | 50.2 | 39000 | 5.32 |
| 4 | $HOOC(CH_2)_4COOH$ | 48.3 | 46500 | 6.35 |

TABLE 4: COMPARATIVE EXAMPLES

| No. | Deinking agent: Polyhydric alcohol alkylene oxide adduct (e): Polyhydric alcohol | Deinking agent: Polyhydric alcohol alkylene oxide adduct (e): Addition mol No. of alkylene oxide | Deinking agent: Dibasic acid (f) | Deinking agent: Molar ratio e:f | Whiteness (%) | Number of unliberated ink spots (per $cm^2$) | Area of unliberated ink spots ($mm^2/cm^2$) |
|---|---|---|---|---|---|---|---|
| 5 | Ethylene glycol | EO/PO=35/20 mol | Maleic acid | 1:1 | 51.0 | 26000 | 3.55 |
| 6 | Glycerol | " | " | 1:1 | 51.2 | 25200 | 3.50 |
| 7 | " | " | " | 1:2 | 51.8 | 23800 | 3.41 |

Note: EO: ethylene oxide unit.
PO: propylene oxide unit.

The deinking agent of the present invention, which is obtained by reacting a polyoxyalkylene adduct, obtained by adding alkylene oxide(s) to a polyhydric alcohol, with a specific dibasic acid or a fatty acid, is excellent in its ability to collect, aggregate and liberate ink. Thus, paper reclaimed with the deinking agent of the present invention has high whiteness and is contaminated with less unliberated ink spots, compared with those reclaimed with a conventional deinking agent.

While the invention has been described in detail and with reference to specific embodiments thereof, it will be apparent to one skilled in the art that various changes and modifications can be made therein without departing from the spirit and scope thereof.

## Claims

**1.** A deinking agent for the reclamation of waste paper comprising a reaction product which is obtained by reacting (A) a reaction product obtained by adding 10 or more mols of (A) (i) alkylene oxide(s), expressed as polyoxyalkylene groups, being selected from the group consisting of ethylene oxide, propylene oxide and butylene oxide, wherein the alkylene oxide(s) may be either a random polymer chain or a block polymer chain when two or more kinds of oxyalkylene groups are present, per mol of (A) (ii) a polyhydric alcohol, with (B) at least one of the compounds represented by the following formulae (1), (2), (3) and (4):
formula (1):

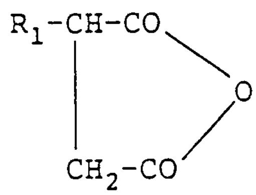

wherein $R_1$ represents an alkyl or alkenyl group having 5 to 30 carbon atoms;
formula (2):

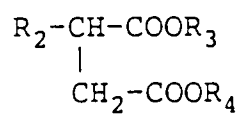

wherein $R_2$ represents an alkyl or alkenyl group having 5 to 30 carbon atoms; and
$R_3$ and $R_4$ both represent hydrogen atoms or either one represents an alkyl or alkenyl group having 1 to 8 carbon atoms and the other represents a hydrogen atom;
formula (3):

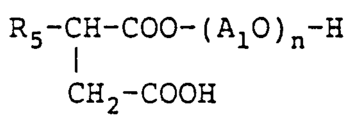

and/or

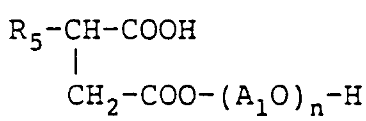

wherein $R_5$ represents an alkyl or alkenyl group having 5 to 30 carbon atoms; and
$A_1O$ represents a polyoxyalkylene group formed by polymerizing oxyalkylene groups having 2 to 4 carbon atoms which polyoxyalkylene group may be either a random polymer chain or a block polymer claim when two or more kinds of the oxyalkylene groups are present; and n represents a number of 1 or above so as to give a number average molecular weight to the corresponding polyoxyalkylene group of 10,000 or less; and
formula (4):

$R_6$-COOH

wherein $R_6$ represents an alkyl or alkenyl group having 5 to 21 carbon atoms or an alkylphenyl or alkenylphenyl group having an alkyl or alkenyl group having 3 to 20 carbon atoms.

**2.** A deinking agent for the reclamation of waste paper as claimed in Claim 1, which further comprises at least one other deinking agent.

**3.** A deinking agent for the reclamation of waste paper as claimed in Claim 1, which is used in an amount of from 0.1 to 0.8% by weight based on the dry starting waste paper.

**4.** A deinking agent for the reclamation of waste paper as claimed in Claim 2, which is used in an amount of from 0.1 to 0.8% by weight based on the dry starting waste paper.

**5.** A deinking agent for the reclamation of waste paper as claimed in Claim 1, which comprises a product obtained by reacting 0.5 mol or more of at least one of the compounds represented by formulae (1), (2), (3) and (4) with 1 mol of the reaction product obtained by adding 10 mols or more of alkylene oxide(s) per mol of the polyhydric alcohol.

**6.** A deinking agent for the reclamation of waste paper as claimed in Claim 5, which further comprises at least one other deinking agent.

**7.** A deinking agent for the reclamation of waste paper as claimed in Claim 5, which is used in an amount of from 0.1 to 0.8% by weight based on the dry starting waste paper.

**8.** A deinking agent for the reclamation of waste paper as claimed in Claim 6, which is used in an amount of from 0.1 to 0.8% by weight based on the dry starting waste paper.

**9.** A deinking agent for the reclamation of waste paper as claimed in Claim 1, which comprises a product obtained by reacting 1 mol or more of the compound represented by formula (4) with 1 mol of the reaction product obtained by adding 10 mols or more of alkylene oxide(s) per mol of the polyhydric alcohol.

**10.** A deinking agent for the reclamation of waste paper as claimed in Claim 9, which further comprises at least one other deinking agent.

**11.** A deinking agent for the reclamation of waste paper as claimed in Claim 9, which is used in an amount of from 0.1 to 0.8% by weight based on the dry starting waste paper.

**12.** A deinking agent for the reclamation of waste paper as claimed in Claim 10, which is used in an amount of from 0.1 to 0.8% by weight based on the dry starting waste paper.

**Patentansprüche**

**1.** Ein Druckfarben-Entfernungsmittel für die Rückgewinnung von Altpapier, umfassend ein Reaktionsprodukt, welches durch Reaktion (A) eines Reaktionsprodukts, das durch Anlagerung von 10 oder mehr Molen von (A) (i) Alkylenoxid(en), als Polyoxyalkylengruppen bezeichnet, ausgewählt aus der Gruppe, die aus Ethylenoxid, Propylenoxid und Butylenoxid besteht, wobei die Alkylenoxid(e) entweder eine zufällige Polymerkette oder eine Blockpolymerkette sein können, wenn zwei oder mehr Arten von Oxyalkylengruppen vorhanden sind, an 1 Mol (A) (ii) eines mehrwertigen Alkohols erhalten wird, mit (B) mindestens einer der Verbindungen, die durch die folgenden allgemeinen Formeln (1), (2), (3) und (4) dargestellt werden, gewonnen wird:
Formel (1):

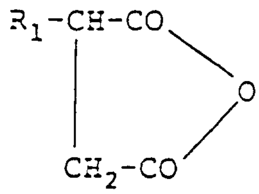

worin $R_1$ eine Alkyl- oder Alkenylgruppe mit 5 bis 30 Kohlenstoffatomen bedeutet;
Formel (2):

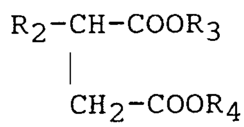

worin $R_2$ eine Alkyl- oder Alkenylgruppe mit 5 bis 30 Kohlenstoffatomen und
$R_3$ und $R_4$ beide Wasserstofratome, oder entweder einer der Reste eine Alkyl- oder Alkenylgruppe mit 1 bis 8 Kohlenstoffatomen und der andere ein Wasserstoffatom bedeuten;
Formel (3):

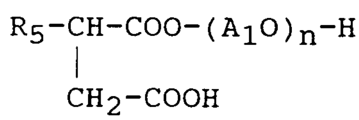

und/oder

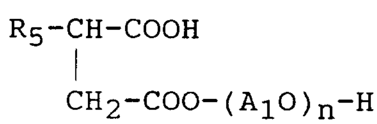

worin $R_5$ eine Alkyl- oder Alkenylgruppe mit 5 bis 30 Kohlenstoffatomen, und
$A_1O$ eine Polyoxyalkylengruppe, die durch Polymerisation von Oxyalkylengruppen mit 2 bis 4 Kohlenstoffatomen gebildet wird, wobei die Polyoxyalkylengruppe entweder eine zufällige Polymerkette oder eine Blockpolymerkette sein kann, wenn zwei oder mehrere Arten von Oxyalkylengruppen vorhanden sind; und n eine Zahl von 1 oder darüber ist, so daß eine Zahlenmittel-Molekulargewicht der entsprechenden Polyoxyalkylengruppe von 10.000 oder weniger erhalten wird, bedeuten; und
Formel (4):

$R_6$-COOH

worin $R_6$ eine Alkyl oder Alkenylgruppe mit 5 bis 21 Kohlenstoffatomen oder eine Alkylphenyl- oder Alkenylphenylgruppe mit einer Alkyl- oder Alkenylgruppe mit 3 bis 20 Kohlenstoffatomen bedeuten.

**2.** Ein Druckfarben-Entfernungsmittel für die Rückgewinnung von Altpapier, wie es im Anspruch 1 beansprucht wird, welches zusätzlich mindestens ein anderes Druckfarben-Entfernungsmittel umfaßt.

**3.** Ein Druckfarben-Entfernungsmittel für die Rückgewinnung von Altpapier, wie es im Anspruch 1 beansprucht wird, welches in einer Menge von 0,1 bis 0,8 Gew.%, bezogen auf das eingesetzte trockene Altpapier, verwendet wird.

**4.** Ein Druckfarben-Entfernungsmittel für die Rückgewinnung von Altpapier, wie es im Anspruch 2 beansprucht wird, welches in einer Menge von 0,1 bis 0,8 Gew.%, bezogen auf das eingesetzte trockene Altpapier, verwendet wird.

**5.** Ein Druckfarben-Entfernungsmittel für die Rückgewinnung von Altpapier, wie es im Anspruch 1 beansprucht wird, welches ein Produkt umfaßt, welches durch Reaktion von 0,5 Molen oder mehr von

mindestens einer der Verbindungen, die durch die Formeln (1), (2), (3) und (4) dargestellt werden, mit 1 Mol eines Reaktionsprodukts, das durch Anlagerung von 10 Molen oder mehr von Alkylenoxid(en) an 1 Mol des mehrwertigen Alkohols erhalten wurde, gewonnen wird.

**6.** Ein Druckfarben-Entfernungsmittel für die Rückgewinnung von Altpapier, wie es im Anspruch 5 beansprucht wird, welches zusätzlich mindestens ein anderes Druckfarben-Entfernungsmittel umfaßt.

**7.** Ein Druckfarben-Entfernungsmittel für die Rückgewinnung von Altpapier, wie es im Anspruch 5 beansprucht wird, welches in einer Menge von 0,1 bis 0,8 Gew.%, bezogen auf das eingesetzte trockene Altpapier, verwendet wird.

**8.** Ein Druckfarben-Entfernungsmittel für die Rückgewinnung von Altpapier, wie es im Anspruch 6 beansprucht wird, welches in einer Menge von 0,1 bis 0,8 Gew.%, bezogen auf das eingesetzte trockene Altpapier, verwendet wird.

**9.** Ein Druckfarben-Entfernungsmittel für die Rückgewinnung von Altpapier, wie es im Anspruch 1 beansprucht wird, welches ein Produkt umfaßt, welches durch Reaktion von 1 Mol oder mehr von einer Verbindung, die durch die Formel (4) dargestellt wird, mit 1 Mol eines Reaktionsprodukts, das durch Anlagerung von 10 Molen oder mehr von Alkylenoxid(en) an 1 Mol des mehrwertigen Alkohols erhalten wurde, gewonnen wird.

**10.** Ein Druckfarben-Entfernungsmittel für die Rückgewinnung von Altpapier, wie es im Anspruch 9 beansprucht wird, welches zusätzlich mindestens ein anderes Druckfarben-Entfernungsmittel umfaßt.

**11.** Ein Druckfarben-Entfernungsmittel für die Rückgewinnung von Altpapier, wie es im Anspruch 9 beansprucht wird, welches in einer Menge von 0,1 bis 0,8 Gew.%, bezogen auf das eingesetzte trockene Altpapier, verwendet wird.

**12.** Ein Druckfarben-Entfernungsmittel für die Rückgewinnung von Altpapier, wie es im Anspruch 10 beansprucht wird, welches in einer Menge von 0,1 bis 0,8 Gew.%, bezogen auf das eingesetzte trockene Altpapier, verwendet wird.

**Revendications**

**1.** Agent de désencrage destiné à la récupération des vieux papiers, comprenant un produit réactionnel qui est obtenu par la réaction d'un produit réactionnel (A) obtenu en ajoutant au moins 10 moles d'oxyde(s) d'alkylène (A) (i) exprimés sous la forme de groupements polyoxyalkylène, étant choisi(s) dans le groupe constitué de l'oxyde d'éthylène, de l'oxyde de propylène et de l'oxyde de butylène, dans lequel le ou les oxydes d'alkylène peuvent être soit une chaîne de polymère atactique, soit une chaîne de polymère séquencé lorsque deux ou plusieurs types des groupements oxyalkylène sont présents, par mole d'un alcool polyatomique (A) (ii) avec au moins un composé (B) des composés représentés par les formules (1), (2), (3) et (4) suivantes :

Formule (1) :

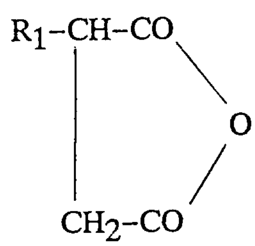

dans laquelle $R_1$ représente un groupement alkyle ou alcényle en $C_5$-$C_{30}$ ;

Formule (2) :

$$\begin{array}{l} R_2\text{-}CH\text{-}COOR_3 \\ \quad\;\; | \\ \quad\; CH_2\text{-}COOR_4 \end{array}$$

dans laquelle $R_2$ représente un groupement alkyle ou alcényle en $C_5$-$C_{30}$ ; et $R_3$ et $R_4$ représentent chacun des atomes d'hydrogène ou l'un des deux représente un groupement alkyle ou alcényle en $C_1$-$C_8$ et l'autre représente un atome d'hydrogène ;

Formule (3) :

$$\begin{array}{l} R_5\text{-}CH\text{-}COO\text{-}(A_1O)_n\text{-}H \\ \quad\;\; | \\ \quad\; CH_2\text{-}COOH \end{array}$$

et/ou

$$\begin{array}{l} R_5\text{-}CH\text{-}COOH \\ \quad\;\; | \\ \quad\; CH_2\text{-}COO\text{-}(A_1O)_n\text{-}H \end{array}$$

dans laquelle $R_5$ représente un groupement alkyle ou alcényle en $C_5$-$C_{30}$ ; et $A_1O$ représente un groupement polyoxyalkylène formé par polymérisation de groupements oxyalkylène en $C_2$-$C_4$, lequel groupement polyoxyalkylène peut être soit une chaîne de polymère atactique, soit une chaîne de polymère séquencé lorsque deux ou plusieurs types des groupements oxyalkylène sont présents et n représente un nombre supérieur ou égal à 1 de manière à obtenir une masse moléculaire moyenne en nombre pour le groupement polyoxyalkylène correspondant inférieure ou égale à 10 000 ;

Formule (4) :

$R_6$-COOH

dans laquelle $R_6$ représente un groupement alkyle ou alcényle en $C_5$-$C_{21}$ ou un groupement alkylphényle ou alcénylphényle possédant un groupement alkyle ou alcényle en $C_3$-$C_{20}$.

2. Agent de désencrage destiné à la récupération des vieux papiers selon la revendication 1, lequel comprend de plus au moins un autre agent de désencrage.

3. Agent de désencrage destiné à la récupération des vieux papiers selon la revendication 1, lequel est utilisé à raison de 0,1 à 0,8 % en masse par rapport aux vieux papiers secs de départ.

4. Agent de désencrage destiné à la récupération des vieux papiers selon la revendication 2, lequel est utilisé à raison de 0,1 à 0,8 % en masse par rapport aux vieux papiers secs de départ.

5. Agent de désencrage destiné à la récupération des vieux papiers selon la revendication 1, lequel comprend un produit obtenu par réaction de 0,5 mole ou plus d'au moins un des composés représentés par les formules (1), (2), (3) et (4) avec 1 mole du produit réactionnel obtenu en ajoutant au moins 10 moles d'oxyde(s) d'alkylène par mole de l'alcool polyatomique.

6. Agent de désencrage destiné à la récupération des vieux papiers selon la revendication 5, lequel comprend de plus au moins un autre agent de désencrage.

7. Agent de désencrage destiné à la récupération des vieux papiers selon la revendication 5, lequel est utilisé à raison de 0,1 à 0,8 % en masse par rapport aux vieux papiers secs de départ.

8. Agent de désencrage destiné à la récupération des vieux papiers selon la revendication 6, lequel est utilisé à raison de 0,1 à 0,8 % en masse par rapport aux vieux papiers secs de départ.

**9.** Agent de désencrage destiné à la récupération des vieux papiers selon la revendication 1, lequel comprend un produit obtenu par réaction d'au moins 1 mole du composé représenté par la formule (4) avec 1 mole du produit réactionnel obtenu en ajoutant au moins 10 moles d'oxyde(s) d'alkylène par mole de l'alcool polyatomique.

**10.** Agent de désencrage destiné à la récupération des vieux papiers selon la revendication 9, lequel comprend de plus au moins un autre agent de désencrage.

**11.** Agent de désencrage destiné à la récupération des vieux papiers selon la revendication 9, lequel est utilisé à raison de 0,1 à 0,8 % en masse par rapport aux vieux papiers secs de départ.

**12.** Agent de désencrage destiné à la récupération des vieux papiers selon la revendication 10, lequel est utilisé à raison de 0,1 à 0,8 % en masse par rapport aux vieux papiers secs de départ.